Europäisches Patentamt

European Patent Office

Office européen des brevets

(11) Numéro de publication : **0 478 434 A1**

# (12) DEMANDE DE BREVET EUROPEEN

(21) Numéro de dépôt : **91402527.5**

(51) Int. Cl.⁵ : **F16C 19/20, F16C 33/66**

(22) Date de dépôt : **24.09.91**

(30) Priorité : **28.09.90 FR 9011971**

(43) Date de publication de la demande :
**01.04.92 Bulletin 92/14**

(84) Etats contractants désignés :
**DE ES GB IT SE**

(71) Demandeur : **S.N.R. ROULEMENTS
Boîte Postale 17 1, rue des Usines
F-74010 Annecy Cédex (FR)**

(72) Inventeur : **Alff, Denis
91, Boulevard du Fier
F-74000 Annecy (FR)**

(74) Mandataire : **Ernst-Schonberg, Michel et al
REGIE NATIONALE DES USINES RENAULT
SA, Sce 0267, 860, quai de Stalingrad
F-92109 Boulogne Billancourt Cédex (FR)**

(54) **Cage autolubrifiante pour palier ou roulement.**

(57)    Une cage selon l'invention est réalisée en au moins deux matériaux différents dont l'un assure le positionnement angulaire des corps roulants (3), et le ou les autres la lubrification de ces mêmes corps roulants et, donc, du palier ou roulement.

Dans une forme de réalisation préférée, la cage est fractionnée sous forme d'intercalaires cylindriques (4) logeant des inserts de lubrification (5) aptes à coulisser axialement.

L'invention permet notamment qu'une lubrification par transfert de matière solide soit réalisée, sans qu'elle soit le fait d'une usure conduisant à un accroissement du jeu entre la cage et les corps roulants.

EP 0 478 434 A1

Jouve, 18, rue Saint-Denis, 75001 PARIS

FIG 1

La présente invention concerne une cage autolubrifiante, notamment pour des paliers ou roulements dans lesquels les bagues et corps roulants sont réalisés en céramique, et qui sont aptes à supporter des températures très élevées (jusqu'à 1 000° C et plus) grâce à l'utilisation de séparateurs de corps roulants résistant à ce type d'environnement et assurant la lubrification du roulement.

Les corps roulants d'un roulement se doivent, dans la plupart des cas, d'être espacés régulièrement les uns des autres afin que leur répartition angulaire entre les bagues intérieure et extérieure soit satisfaisante. Dans les applications courantes, cet espacement est assuré par une cage circulaire ou des intercalaires maintenus et entraînés par les corps roulants. Pour des roulements devant fonctionner dans des environnements très chauds ou très corrosifs, auxquels sont adaptées certaines céramiques techniques, on se heurte à l'emploi de matériaux couramment utilisés tels que plastiques, acier, alliages cuivreux, téflon ou autres dans la réalisation des séparateurs, car ces matériaux ne supportent pas ce type d'environnements. L'emploi de céramique pour la réalisation de cage pose quant à lui le problème de la non-élasticité et de la non-plasticité de ce matériau, et donc de la possibilité de montage ou de maintien en fonctionnement dans le roulement.

Un second problème lié à l'utilisation de tels roulements dans des milieux très particuliers concerne la lubrification des contacts, et donc la durée de vie des organes.

Il est connu, comme décrit dans la demande de brevet français FR-A-2 355 201, d'interposer entre les billes d'un montage tournant de type "vis à bille" des intercalaires sphériques dont les formes concaves aux extrémités leur permettent d'être maintenus par les billes adjacentes. Cet arrangement est tout-à-fait adapté lorsque le circuit des billes est ouvert et qu'il est possible au montage d'insérer alternativement billes et intercalaires. Le cas du roulement à billes, à contact radial notamment, en imposant un montage de toutes les billes préalable à celui des séparateurs, ne permet pas l'emploi d'une telle technique.

Le brevet US n° 3 712 694 divulgue l'utilisation d'intercalaires cylindriques à coins arrondis, lesquels sont pratiquement incompressibles et en un matériau résistant aux températures élevées et possédant des caractéristiques de lubrification par transfert. En fonctionnement, les intercalaires sont guidés par contact contre les pistes ou gorges de roulement extérieure et intérieure et, pour ce faire, ils ont un diamètre très voisin de l'écartement de celles-ci.

Dans les cas très courants où les bagues doivent posséder toutes les deux un épaulement de chaque côté de ces mêmes gorges, le montage de ces intercalaires devient impossible si l'on ne peut leur imposer une déformation importante afin de les insérer entre ceux-ci, ce qui réduit considérablement le domaine d'application de ce procédé.

La lubrification par transfert d'un film des intercalaires vers le roulement telle que décrite suppose une usure desdits intercalaires, et donc un accroissement de jeu qui conduira avec le temps au libre démontage et donc à l'éjection des séparateurs.

Le but de l'invention est d'abord de prévoir une cage pour paliers ou roulements à billes qui soit autolubrifiante sans présenter pour autant l'inconvénient précité que la fonction de lubrification est le fait d'une usure conduisant à un accroissement de jeu.

Pour des cages fractionnées, l'invention a pour autre but de résoudre les difficultés de montage en prévoyant la conjugaison d'une forme déterminée d'intercalaires et d'une méthode de montage particulière statistiquement difficilement reproductible en sens inverse lors du fonctionnement.

Une cage autolubrifiante selon l'invention, pour espacer les corps roulants d'un palier ou roulement, est caractérisée en ce qu'elle est réalisée en au moins deux matériaux différents dont l'un assure le positionnement angulaire des corps roulants, et le ou les autres la lubrification de ces mêmes corps roulants et, par conséquent, du palier ou roulement.

Pour le positionnement angulaire des corps roulants, il y a lieu de choisir des matériaux incompressibles et très résistants à l'usure, tels qu'un acier dur ou certains alliages de titane. Les autres matériaux doivent posséder des propriétés de lubrification solide par transfert, afin d'assurer la lubrification des corps roulants en venant s'user par frottement contre eux. Il s'agira, par exemple, d'un composé graphite ou d'une matrice céramique associée avec ou à base de nitrure de bore.

Dans une forme de réalisation, la cage est fractionnée en intercalaires distincts, chacun placé entre deux corps roulants voisins et auto-centré par ceux-ci, par le jeu de formes complémentaires.

Les intercalaires sont avantageusement cylindriques pour des raisons de fabrication. Les moyens de lubrification sont alors concentriques, avec une aptitude de coulissement axial.

L'invention s'applique également à une cage non fractionnée, en prévoyant des corps de lubrification à l'intérieur de ses parties intercalaires.

D'autres caractéristiques et avantages de l'invention apparaîtront à la lecture de la description d'exemples de réalisation, faite en se référant aux dessins annexés dans lesquels :

la Fig. 1 est une vue en coupe latérale d'un palier comportant une cage selon l'invention,
la Fig. 2 est une vue en coupe selon la ligne II-II de la Fig. 1,
la Fig. 3 est une vue à échelle agrandie, en coupe longitudinale, d'un intercalaire du roulement des Figs. 1 et 2,
la Fig. 4 est une vue semblable à la Fig. 3 d'une autre forme de réalisation d'intercalaire,

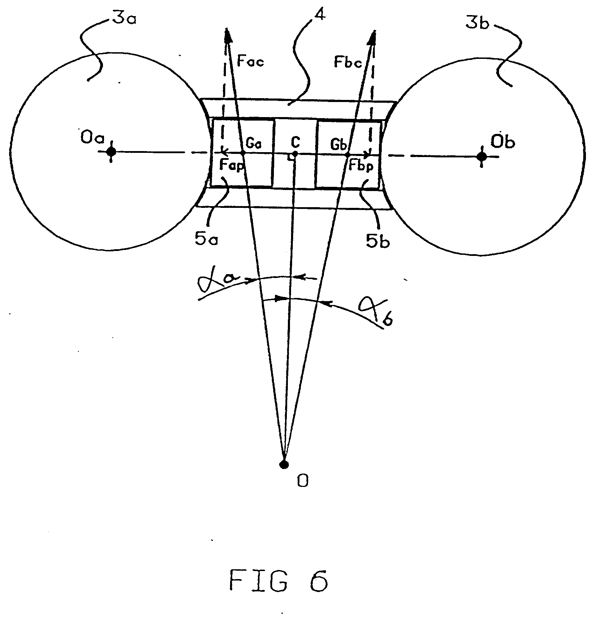

les Figs. 5 et 6 sont des vues de principe illustrant schématiquement la fonction de lubrification de la cage selon l'invention, dans le cas où ses intercalaires sont respectivement tels que celui de la Fig. 3 et celui de la Fig. 4, et

les Figs. 7 à 10 sont des vues latérales illustrant le principe de montage du roulement des Figs. 1 et 2.

Ce roulement comprend classiquement une bague extérieure 1 et une bague intérieure 2 dans lesquelles sont respectivement ménagées des gorges de roulement 11 et 12 recevant des billes 3. Celles-ci sont tenues régulièrement espacées angulairement au moyen d'une cage formée d'intercalaires distincts 4.

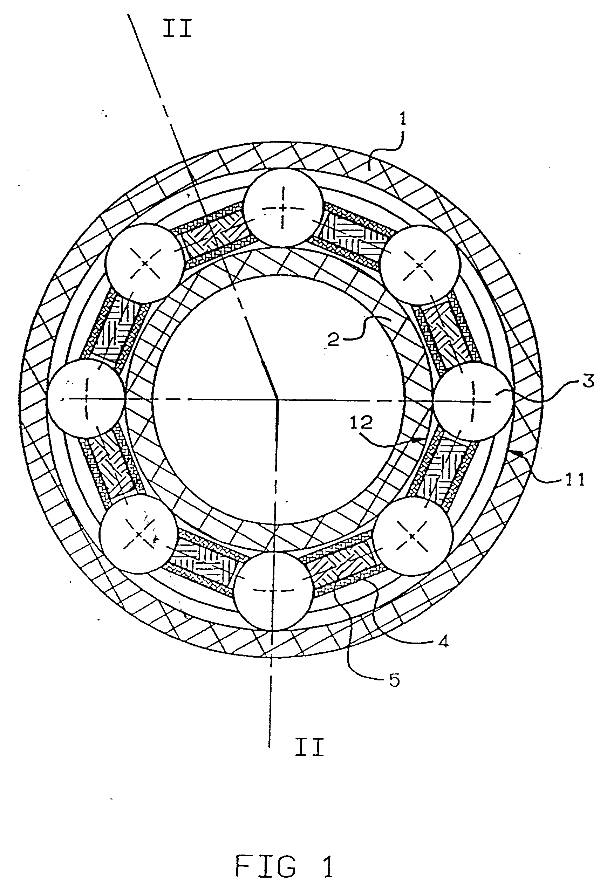

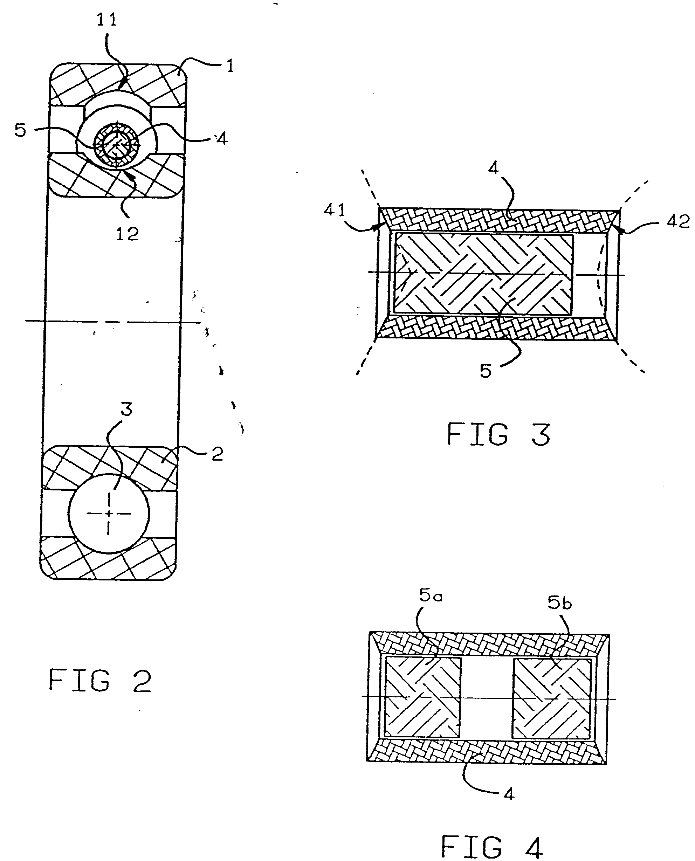

Conformément à l'invention, les intercalaires 4 sont prévus pour assurer en plus du positionnement des billes 3, la lubrification de celles-ci et, par conséquent, la lubrification du roulement. A cet effet, ce sont des éléments creux dans lesquels sont logés des inserts de lubrification 5. Les intercalaires 4 se présentent préférentiellement, pour des raisons de simplicité de réalisation, sous la forme de cylindres creux ou tubes de longueur et de diamètre adaptés au montage dans le roulement. Les extrémités sont réalisées comme en 41, Fig. 3, suivant une forme tronconique, ou comme en 42 suivant une forme sphérique, pour demeurer en contact avec la surface des billes. Comme on le voit dans les dessins, plus spécialement à la Fig. 1, ce type d'engagement entre les billes 3 et les intercalaires 4 se traduit par un positionnement stable de ceux-ci autour des lignes de jonction des centres de billes adjacentes. Cet arrangement dispense donc de la nécessité du guidage des intercalaires 4 dans les gorges de roulement 11 et 12, ce qui ouvre des possibilités de montage comme on le verra dans la suite et, d'autre part, réduit sensiblement les frottements dans le roulement.

Le matériau utilisé pour la réalisation des intercalaires 4 doit résister à l'environnement du roulement en fonctionnement, ainsi qu'à l'usure susceptible d'être occasionnée par le frottement des corps roulants ou billes 3. A titre d'exemple, un acier dur à outil ou un alliage de titane très résistant convient pour des applications où la température n'excède pas 500° C. Au-delà, il est avantageux d'utiliser des céramiques techniques, éventuellement la même nuance que pour les bagues et billes.

A l'intérieur des intercalaires 4, sont logés des inserts de lubrification 5, qui sont de forme complémentaire, mais de longueur moindre, de manière à avoir une aptitude de coulissement. Dans la forme de réalisation montrée, ils sont également libres en rotation, puisque de configuration cylindrique. Les extrémités des inserts 5 ont une forme quelconque, plane par exemple, car l'usure occasionnée par le transfert de matière lubrifiante sur les billes aura tôt fait, après un bref rôdage, de leur conférer la forme optimale.

Pour la réalisation des inserts 5, les matériaux employés, outre leurs propriétés lubrifiantes, doivent résister au milieu ambiant, tout en conservant des caractéristiques satisfaisantes de transfert de matière aux billes 3. Pour des applications où les problèmes d'oxydation sont absents, on peut adopter, par exemple, un composé graphite. Dans le cas de conditions plus sévères, on a la possibilité d'employer du nitrure de bore, bien connu pour ses propriétés de frottement et de résistance, celui-ci pouvant être incorporé dans une matrice céramique servant de liant, de manière à lui conférer les propriétés mécaniques souhaitées.

Deux ou plusieurs matériaux de lubrification peuvent être associés pour la réalisation des inserts 5. En prévoyant des couches longitudinales superposées, on aura la possibilité, par exemple, de contrôler l'usure d'un matériau tendre par un autre plus dur. Si l'insert 5 est formé de deux blocs cylindriques accolés, en fonctionnement, les deux blocs sont opérationnels en alternance.

Dans la forme de réalisation de la Fig. 4, l'insert 5 est formé de deux blocs distincts 5a, 5b alignés longitudinalement. Comme on le verra dans la suite, en fonctionnement, les deux blocs 5a, 5b sont opérationnels simultanément, de sorte que chaque bille 3 est lubrifiée en deux points. Cet arrangement permet de prévoir des conditions d'usure différentes pour les deux blocs suivant la nuance des matériaux employés, et/ou de mieux assurer l'abondance souhaitée de la lubrification.

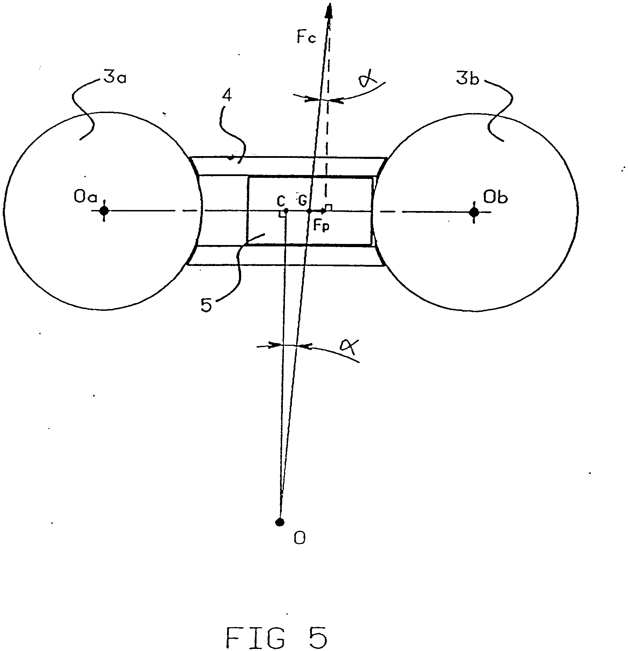

Le contact entre les inserts 5 et les corps roulants ou billes 3 est obtenu, en dehors des phases d'accélération ou de décélération du roulement où la seule inertie suffit à l'établir, par centrifugation. Pour le cas des inserts monobloc tels que celui de la Fig. 3, ceci est illustré à la Fig. 5 où O représente l'axe de rotation du roulement, et Oa, Ob sont les centres des billes voisines 3a, 3b. L'axe longitudinal de l'intercalaire 4 se confond avec Oa-Ob, et son centre C est donc au milieu du segment Oa-Ob. Comme par ailleurs, l'insert 5 est moins long que l'intercalaire 4, et que lors de l'initiation du mouvement du palier, ledit insert est appliqué par inertie contre l'une des billes 3a, 3b, il s'ensuit que son centre de gravité G est angulairement déporté d'un angle $\alpha$ par rapport à C. Par conséquent, la force centrifuge Fc qui s'applique en G a une composante axiale Fp orientée dans le sens du déport de G par rapport à C, laquelle force Fp se traduit par une pression de contact de l'insert 5 contre la bille adjacente, soit la bille 3b à la Fig. 5.

Pour les inserts en deux blocs, tels que 5a, 5b à la Fig. 4, on prévoit de préférence que leurs longueurs soient telles qu'en toute position, les centres de gravité Ga, Gb soient déportés de part et d'autre du centre C de l'intercalaire 4. Ainsi, en fonctionnement, les forces centrifuges Fac et Fbc s'exerçant respectivement sur les blocs 5a, 5b font des angles $\alpha_a$ et $\alpha_b$ de chaque côté de Oc, et ont par conséquent des composantes axiales Fap et Fbp de sens opposés et appliquant respectivement les blocs 5a, 5b contre les billes 3a, 3b. Comme pour un insert monobloc, l'effort de contact ainsi obtenu est suffisant pour assurer par frottement le transfert de lubrifiant solide.

L'invention a également pour objet une méthode de montage d'un tel roulement comportant une cage sous forme d'intercalaires distincts. En effet, le montage n'est pas sans poser de problème puisqu'aucun des matériaux en jeu ne présente de propriétés élastiques ou plastiques suffisantes pour permettre la mise en place des éléments à force (par encliquetage, passage d'un seuil, etc.), ni la déformation après mise en place pour éviter le démontage (sertissage, rivetage, etc.). Il en est notamment ainsi pour les roulements à billes à contact radial, dans lesquels le ou les éléments séparateurs sont engagés en fin d'assemblage, lorsque les billes sont déjà en place entre les bagues.

La méthode de montage consiste, conformément à l'invention, à prévoir un jeu circonférentiel réparti entre les billes et intercalaires, lequel jeu est suffisant pour permettre le placement du dernier intercalaire dans le roulement.

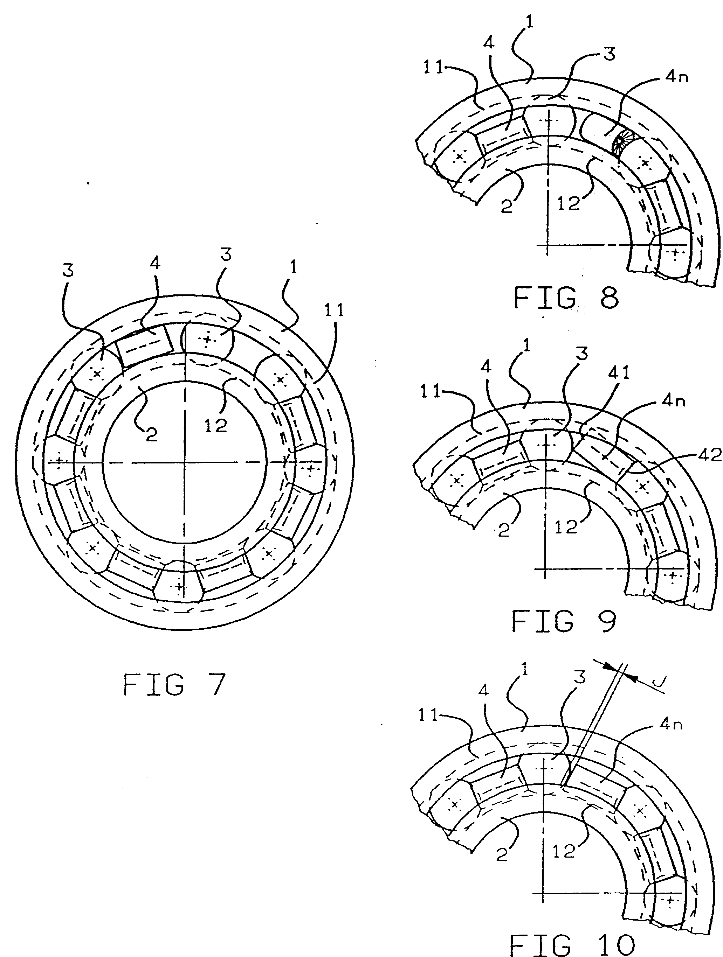

La méthode est illustrée par les Figs. 7 à 10 qui en représentent les phases successives. Tout d'abord, on place par le côté tous les intercalaires 4, sauf le dernier 4n, entre les billes 3, Fig. 7, et on amène l'ensemble des intercalaires et des billes en contact de façon à ne laisser aucun jeu entre eux. Le dernier intercalaire 4n est alors enfilé de profil, Fig. 8, entre les deux dernières billes à séparer, sur l'une desquelles on en applique l'extrémité 42 pour placer l'autre, 41, contre le fond de la gorge 11 de la bague extérieure 1, Fig. 9. Le jeu repéré J à la Fig. 10 permet alors, par un léger effort, de descendre l'extrémité 41 en regard de la bille adjacente. De préférence, la longueur du dernier intercalaire 4n sera prévue telle que cette ultime opération s'effectue avec un léger coincement. Le jeu résiduel J se répartira ensuite naturellement sur toute la circonférence du roulement par rotation de celui-ci, et le positionnement mutuel des billes et intercalaires sera assuré.

On insistera sur le fait que cette méthode de montage permet une différence sensible entre le diamètre des intercalaires et l'écartement des gorges de roulement 11 et 12. Elle est alors liée à des intercalaires tels que précédemment décrits qui sont autocentrés de façon stable par la complémentarité des formes de leurs extrémités et des corps roulants.

Si on le souhaite, il est possible de réduire le jeu J par chauffage et dilatation préalables de la bague extérieure 1, afin de pouvoir placer un dernier intercalaire 4n plus grand. Lorsque l'utilisation préférentielle du roulement est prévue à des hautes températures, on peut également prévoir des intercalaires dont le coefficient de dilatation est supérieur à celui du reste du roulement pour minimiser le jeu résiduel J.

La probabilité, en fonctionnement, d'un désassemblage reproduisant les phases du montage en sens inverse est pratiquement nulle, car il est difficilement envisageable de retrouver le jeu circonférentiel concentré en un point, d'autant plus que l'effort centrifuge exercé sur les intercalaires a tendance à répartir ce jeu, et que la création d'un film lubrifiant entre les éléments empêche le contact direct tel que réalisé initialement. En outre, il est bien connu que les corps roulants ont tendance à se regrouper dans la zone de charge du roulement, et que les intercalaires ainsi sollicités en compression n'en sont que mieux maintenus.

On notera, pour finir, les avantages procurés par cette méthode de montage, comme l'autocentrage des intercalaires qui se traduit par un bruit de fonctionnement relativement faible, la simplicité de fabrication en ce sens qu'aucune précision de réalisation n'est requise, et enfin le fait que les seules contraintes appliquées sur tous les organes du roulement sont de compression, particularité très appréciable notamment pour l'emploi de matériaux céramiques tout-à-fait adaptés à ce genre de sollicitations.

## Revendications

1°) Cage autolubrifiante pour espacer les corps roulants d'un palier ou roulement, caractérisé en ce qu'elle est réalisée par des intercalaires constitués en au moins deux matériaux différents, dont l'un assure le positionnement angulaire des corps roulants (3), et le ou les autres la lubrification solide par transfert de manière à lubrifier lesdits corps roulants par contact avec eux et en s'usant par frottement.

2°) Cage autolubrifiante selon la revendication 1, caractérisée en ce que les matériaux assurant le positionnement angulaire des corps roulants (3) sont choisis incompressibles et résistant à l'usure.

3°) Cage autolubrifiante selon l'une des revendications 1 ou 2, caractérisée en ce qu'entre les éléments en matériau assurant le positionnement angulaire des corps roulants (3) et les éléments en matériau de lubrification, est prévue une liberté dans la direction de déplacement des corps roulants (3).

4°) Cage autolubrifiante selon la revendication 3, caractérisée en ce que ses parties intercalaires sont creuses et ouvertes à leurs extrémités, et renferment des inserts de lubrification (5).

5°) Cage autolubrifiante selon la revendication 4, caractérisée en ce que lesdits inserts de lubrification (5) sont monobloc.

6°) Cage autolubrifiante selon la revendication 4, caractérisée en ce que lesdits inserts de lubrification comprennent deux blocs distincts (5a, 5b).

7°) Cage autolubrifiante selon l'une quelconque des revendications 1 à 6, caractérisée en ce qu'elle est fractionnée en intercalaires distincts (4) placés entre les corps roulants (3), et autocentrés par ceux-ci, par le jeu de formes complémentaires.

**8°)** Cage autolubrifiante selon la revendication 3, caractérisée en ce que les éléments de positionnement (4) sont cylindriques et comportent des moyens de lubrification concentriques aptes à coulisser axialement.

**9°)** Cage autolubrifiante selon l'une quelconque des revendications 3 à 8, caractérisée en ce que les moyens de lubrification sont configurés de manière à être maintenus au contact des corps roulants (3) sous l'effet de la force centrifuge induite lors de la rotation du palier ou du roulement.

**10°)** Cage autolubrifiante selon l'une quelconque des revendications 1 à 9, caractérisée en ce qu'elle comprend un composé graphite en tant que matériau de lubrification.

**11°)** Cage autolubrifiante selon l'une quelconque des revendications 1 à 9, caractérisée en ce qu'elle comprend une matrice céramique associée avec, ou composée de nitrure de bore en tant que matériau de lubrification.

**12°)** Méthode pour monter une cage autolubrifiante fractionnée selon l'une quelconque des revendications 1 à 11 dans un palier ou roulement comprenant des bagues extérieure et intérieure (1, 2) avec des gorges de roulement (11, 12) pour des corps roulants (3), caractérisée en ce qu'elle consiste à prévoir un jeu circonférentiel (J) réparti entre les corps roulants (3) et intercalaires (4), lequel jeu est suffisant pour permettre le placement du dernier intercalaire (4n) dans le roulement sans déformation élastique ni plastique des différents organes, et en ce qu'elle comprend les étapes successives de monter tous les intercalaires (4) sauf le dernier (4n) entre les corps roulants (3), d'établir le contact entre ces intercalaires et les corps roulants de manière à réduire à néant le jeu (J), de placer alors le dernier intercalaire (4n), puis de répartir le jeu (J) en faisant tourner le palier ou roulement.

**13°)** Méthode de montage selon la revendication 12, caractérisée en ce que le jeu (J) est augmenté pour le montage par chauffage et dilatation préalables de la bague extérieure (1).

FIG 1

FIG 2

FIG 3

FIG 4

FIG 5

FIG 6

FIG 7

FIG 8

FIG 9

FIG 10

Office européen
des brevets

**RAPPORT DE RECHERCHE EUROPEENNE**

Numero de la demande

EP 91 40 2527

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 029 445 (F. SCHUBERT)<br>* page 2, lignes 5-50; figures 4,5 *<br>--- | 1,2,5-8 | F 16 C 19/20<br>F 16 C 33/66 |
| X | US-A-3 073 656 (D. TANN)<br>* colonne 3, lignes 5-43; figures 5,7 *<br>--- | 1,9 | |
| A | US-A-3 790 239 (R.W. LAUX)<br>* colonne 6, lignes 35-60;<br>revendications 1,2 *<br>--- | 10,11 | |
| A | AT-B- 47 285 (G. AGNELLI et al.)<br>* pages 1,2 *<br>----- | 12 | |

**DOMAINES TECHNIQUES RECHERCHES (Int. Cl.5)**

F 16 C

Le présent rapport a été établi pour toutes les revendications

| Lieu de la recherche | Date d'achèvement de la recherche | Examinateur |
|---|---|---|
| BERLIN | 29-11-1991 | HOFFMANN M.P. |

**CATEGORIE DES DOCUMENTS CITES**

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................
& : membre de la même famille, document correspondant

EPO FORM 1503 03.82 (P0402)